# EUROPEAN PATENT SPECIFICATION

(11) **EP 2 159 083 B1**
(45) Date of publication and mention of the grant of the patent: **17.08.2011**
(21) Application number: 09168929.9
(22) Date of filing: 28.08.2009
(51) Int. Cl.: B60D 1/06

(54) **Ball coupling**
Kugelkopf
Couplage de balle

(30) Priority: 28.08.2008 NL 2001930
(43) Date of publication of application: 03.03.2010
(73) Proprietor: Bart Veldhuizen B.V., 3737 BA Groenekan (NL)
(72) Inventor: Veldhuizen, Pieter Gerrit, 3737 BA, Groenekan (NL)
(74) Representative: Klavers, Cornelis

(56) References cited:
- GB-A- 912 217
- NL-C- 63 862
- US-A- 3 046 038
- US-A- 3 831 982
- US-A- 5 205 666
- US-A1- 2002 109 335
- US-A1- 2003 044 226
- US-B1- 6 186 532

## Description

The present invention relates to a coupling in accordance with the pre-characterising portion of claim 1.

The present invention further relates to a truck and to a trailer fitted with such a coupling.

A coupling is known from US-4,209,184. The known coupling comprises ball engaging means mounted on the tongue of a trailer, in the form of a ball receptacle and a spring-mounted ball support, between which a socket is located for receiving a ball attached to a truck. When a locking lever is released, the ball support moves downwards and an entry to the socket is released, after which the trailer tongue provided with the ball engaging means can be lifted, moved towards the ball and be lowered onto said ball.

A drawback of lifting and moving the trailer and subsequently lowering the ball engaging means onto the ball is that moving the trailer and positioning the socket above the ball, which is usually done manually, is a difficult, physically demanding operation which involves a risk of injury.

A coupling acknowledged in the pre-characterised portion of claim 1 is known from NL-63862. The known coupling comprising a ball and ball engaging means, the latter being attached to a vehicle. The ball engaging means are provided with a socket and are at least partially movable, in such a manner that when the ball and the socket move towards each other in substantially horizontal direction, the movable part of the ball engaging means is moved in a direction away from the direction of approach.

A number of embodiments of couplings according to the present invention will now be explained in more detail with reference to the figures below, in which like parts are indicated by the same numerals. In the drawing:
Figures 1A and 1B are schematic representations in side view and in top plan view, respectively, of a first embodiment of ball engaging means for use in the coupling according to the invention;
Figures 2A and 2B are schematic representations in sectional view and in top plan view, respectively, of a second embodiment of ball engaging means for use in the coupling according to the invention;

The object of the present invention is to provide an improved coupling, which makes it possible to carry out said coupling in a safer and less physically demanding manner.

In order to accomplish that object, the coupling according to the invention is characterised in that the ball is attached to a truck, and the ball engaging means are attached to a trailer, that the movable part of the ball engaging means is capable of translational movement, and that the translational movable part of the ball engaging means is capable of translational movement in substantially vertical direction.

The coupling according to the invention has the advantage that when the ball and the ball engaging means move towards each other in a horizontal plane, the translational movable part of the ball engaging means is moved in a substantially vertical direction away from the direction of approach. The result is that coupling advantageously takes place while the driver can remain seated in the hauling vehicle - the truck - reversing it in practice, so that the ball can be moved towards the open socket and be automatically engaged by the ball engaging means by moving the vehicle. Advantageous is furthermore the fact that coupling no longer involves physical exertion, and that the driver can safely remain inside the truck while said coupling takes place, so that he or she will no longer run any risk.

Various possible practical embodiments and the associated advantages will be defined in the further dependent claims and be explained in the description below.

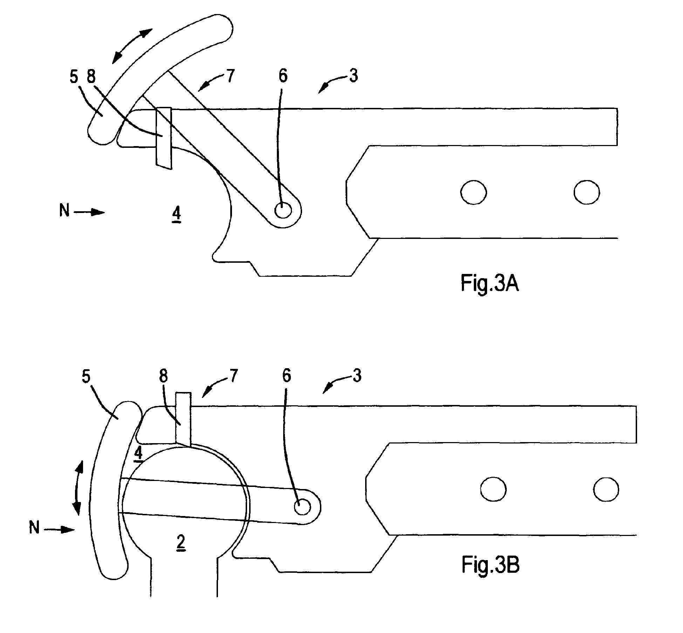

Figures 3A and 3B are schematic representations, both in side view, of a third embodiment of ball engaging means for use in the coupling according to the invention and of the coupling according to the invention in the engaging position thereof;

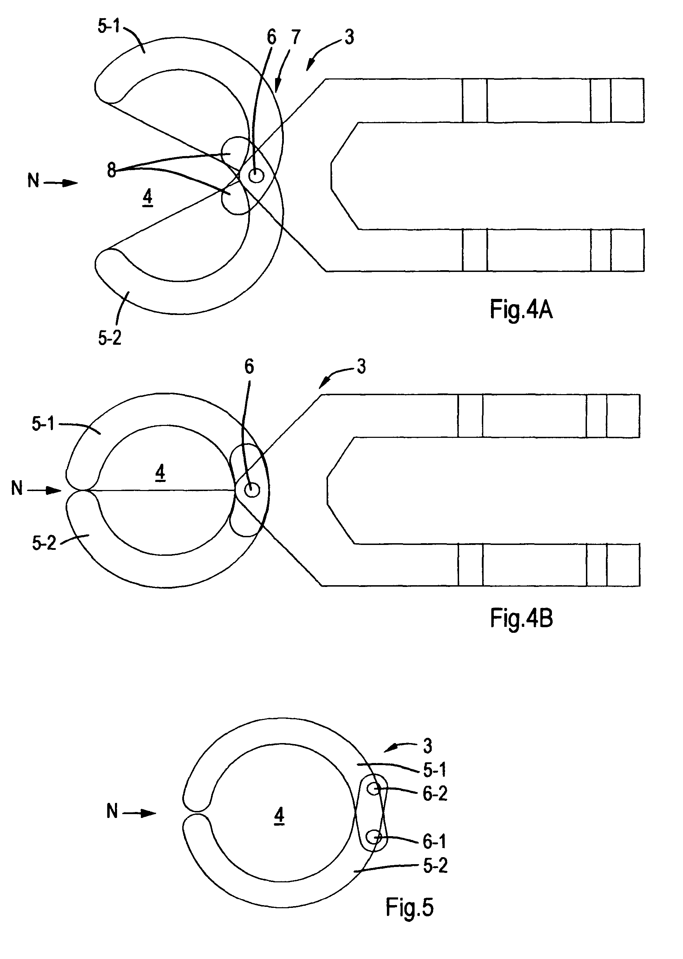

Figures 4A and 4B are schematic representations, both in top plan view, of a fourth embodiment of ball engaging means for use in the coupling according to the invention; and
Figure 5 shows a fifth embodiment, which is a variant to the embodiments of figures 4A and 4B.

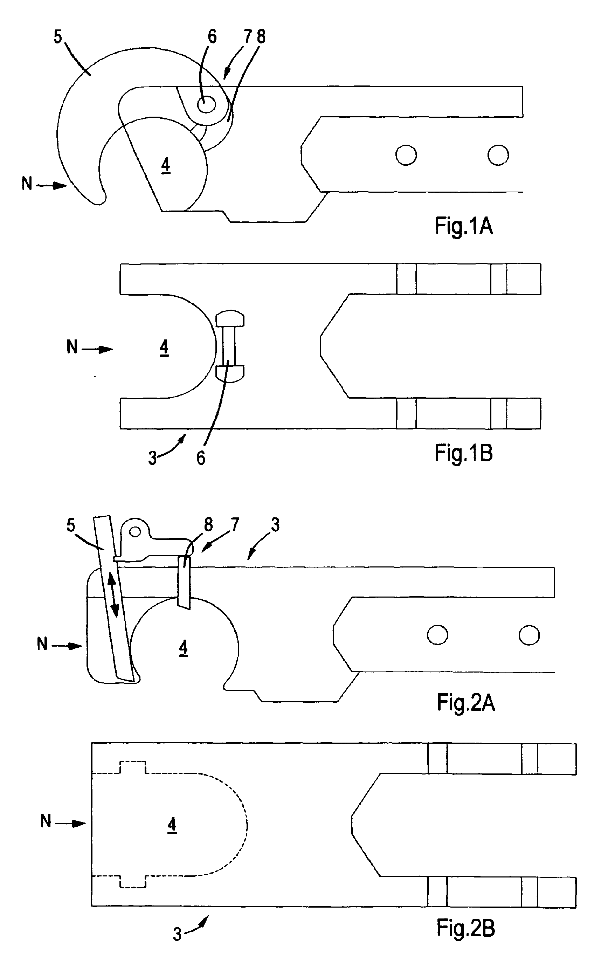

Figures 1A and 1B are schematic views of a first embodiment of ball engaging means 1, which, together with a ball 2 (not shown), form part of a coupling 3 used for hitching a truck and a trailer together. As is known, the truck is provided with the ball 2 and the trailer is provided with the ball engaging means 1, in which a socket for the ball 2 is present. The illustrated ball engaging means 1 have an at least partially movable part in the form of a beak or hook 5, which is pivotable about a pin 6, and that in such a manner that when the ball 2 and the socket 4 move towards each other in substantially horizontal direction, the movable part 5 of the ball engaging means 1 is moved in a direction away from the direction of approach (indicated by the arrow N). Coupling can thus take place in a horizontal plane, without there being a need to lift the tongue with the ball engaging means 1 or manoeuvre it into position. The coupling 3 comprises ball locking means 7 integrated in the socket 4 of the ball engaging means 1 and partially projecting therein, which locking means are provided with a lip 8, which activates the locking means 7 (not further described), which are functionally connected to the receiving means 1, upon contact with the ball 2. Said locking means 7 ensure that the ball 2 will remain locked in the socket 4, because the hook 5 is locked against pivoting in that position. To release the ball 2 from the socket 4, release means functionally connected to the locking means 7 are to be operated, whereupon the ball 2 is released from the socket 4, without any additional operations being required, when the truck is simply driven forwards. In the illustrated first embodiment, the pivot pin 6 extends in a horizontal plane, so that the one-piece beak or hook 4 can be pivoted upwards. In another position of the pin 6, the hook 5 can pivot to one side, for example, so that it can be pivoted in a direction away from the direction of approach of the ball 2.

Figures 2A and 2B are schematic views of a second embodiment of the ball engaging means 1 of the coupling 3. In this embodiment, the ball engaging means 1 comprise an at least partially movable part 5, which is capable of translational movement in this case, in particular in a plane transversely to the longitudinal direction. In the lifted position of the part 5, the translational part 5 of the ball engaging means 1 is moved in a direction away from the direction of approach when the ball 2 and the socket 4 to be coupled together move toward each other in substantially horizontal direction (arrow N), which in turn leads to the aforesaid advantages. In this embodiment, too, the coupling 3 comprises ball locking means 7 integrated in the socket 4 of the ball engaging means 1 and partially projecting into said opening, which locking means 7 are provided with a lip 8, which activates (by means of a possibly mousetrap-like construction) the locking means 7 (not further described), which are functionally connected to the receiving means 1, upon contact with the ball 2. Said locking means ensure that the ball 2 will remain locked in the opening 4, because the translating part 5 is locked against translational movement in that position. To release the ball 2 from the socket 4, release means functionally connected to the locking means 7 are to be operated, whereupon the ball 2 is released from the socket 4, without any additional operations being required, when the truck is simply driven forwards.

Figures 3A and 3B are schematic views of a third embodiment of the coupling 3. This embodiment comprises a part 5 which is pivotally movable about a horizontal pivot pin 6, which part 5, in the raised position thereof (figure 3A), provides free horizontal access (arrow N) for the ball 2 to the socket 4 and which, in the lowered position thereof (figure 3B), engages the ball 2 and possibly locks it in position. Locking takes place, for example, when a locking, play-reducing mechanism connected to the pin 6 practically eliminates the amount of play between the ball 2 and the socket 4, which may result in part from wear. In a similar manner as described above, this embodiment comprises ball locking means 7 provided with a lip 8 projecting into the socket 4 as well as release means connected thereto.

Figures 4A and 4B are schematic views of a fourth embodiment of ball engaging means 1 being pivotable about a single pin 6 for use in the coupling 3. In this case the receiving means 1 are configured as two-part, pivotable means comprising engaging members 5-1 and 5-2. In the open position of the engaging members 5 (figure 4A), the substantially horizontal accessway (arrow N) of the ball 2 to the socket 4 is clear, and in the closed position (figure 4B), the engaging members engage the ball 2 in a spoon-like embracement. Figure 5 shows a variant thereof, in which the spoons 5-1, 5-2 are each pivotable about their own pivot pins 6-1, 6-2. As already explained before, also these embodiments and the variant comprise a lip 8 projecting into the socket 4, ball locking means 7 and release means connected thereto.

## Claims

1. A coupling (3) comprising a ball (2) and ball engaging means (1) provided with a socket (4), which ball engaging means (1) are at least partially movable, in such a manner that when the ball (2) and the socket (4) move towards each other in substantially horizontal direction, the movable part (5) of the ball engaging means (1) is moved in a direction away from the direction of approach, **characterised in that** the ball (2) is attached to a truck, and the ball engaging means (1) are attached to a trailer, that the movable part (5) of the ball engaging means (1) is capable of translational movement, and that the translational movable part (5) of the ball engaging means (1) is capable of translational movement in substantially vertical direction.

2. A coupling (3) according to claim 1, **characterised in that** the movable part (5) of the ball engaging means (5) is formed by engaging members (5; 5-1, 5-2), which, in the coupled position, at least partially embrace the ball (2).

3. A coupling (3) according to claim 2, **characterised in that** said engaging members (5; 5-1, 5-2) are configured as beaks (5), hooks (5) or spoons (5-1, 5-2).

4. A coupling (3) according to any one of claims 1-3, **characterised in that** the movable part (5) of the ball engaging means (1) is capable of pivotable movement.

5. A coupling (3) according to claim 4, **characterised in that** the pivotally movable part of the ball engaging means (1) is pivotable about a substantially horizontal pin (6).

6. A coupling (3) according to claim 5, **characterised in that** said horizontal pin (6) is connected to a wear-adjusting and play-reducing mechanism.

7. A coupling (3) according to any one of claims 4-6, **characterised in that** the pivotally movable part (5) of the ball engaging means (1) is provided with one or more, in particular two, mutually pivotable ball embracing means (5-1, 5-2).

8. A coupling (3) according to any one of claims 1-7, **characterised in that** the translational part (5) of the ball engaging means (1) is capable of translational movement in a plane transversely to the longitudinal direction.

9. A coupling (3) according to any one of claims 1-8, **characterised in that** the coupling (3) comprises ball locking means (7).

10. A coupling (3) according to claim 9, **characterised in that** said ball locking means (7) and said ball engaging means (1) are integrated with each other.

11. A coupling (3) according to claim 9 or 10, **characterised in that** said ball locking means (7) are connected to a movable lip (8) projecting into the socket (4), which locks the ball (2) in the socket (4) upon contact therewith.

12. A truck fitted with a coupling (3) according to any one of claims 1-11.

13. A trailer fitted with a coupling (3) according to any one of claims 1-11.

## Patentansprüche

1. Kupplung (3), umfassend eine Kugel (2) und Kugeleingriffsmittel (1), die mit einer Fassung (4) versehen sind, wobei die Kugeleingriffsmittel (1) zumindest teilweise derart beweglich sind, dass das bewegliche Teil (5) der Kugeleingriffsmittel (1), wenn sich die Kugel (2) und die Fassung (4) in im Wesentlichen horizontaler Richtung zueinander hin bewegen, in einer Richtung weg von der Annäherungsrichtung bewegt ist, **dadurch gekennzeichnet, dass** die Kugel (2) an einem Lastkraftwagen angebracht ist und die Kugeleingriffsmittel (1) an einem Anhänger angebracht sind, dass das bewegliche Teil (5) der Kugeleingriffsmittel (1) zur Translationsbewegung imstande ist, und dass das translationsbewegliche Teil (5) der Kugeleingriffsmittel (1) zur Translationsbewegung in im Wesentlichen vertikaler Richtung imstande ist.

2. Kupplung (3) nach Anspruch 1, **dadurch gekennzeichnet, dass** das bewegliche Teil (5) der Kugeleingriffsmittel (1) durch Eingriffsglieder (5; 5-1, 5-2) ausgebildet ist, die in der gekuppelten Position die Kugel (2) zumindest teilweise umklammern.

3. Kupplung (3) nach Anspruch 2, **dadurch gekennzeichnet, dass** die Eingriffsglieder (5; 5-1, 5-2) als Hörner (5), Haken (5) oder Löffel (5-1, 5-2) ausgebildet sind.

4. Kupplung (3) nach einem der Ansprüche 1 bis 3, **dadurch gekennzeichnet, dass** das bewegliche Teil (5) der Kugeleingriffsmittel (1) zur Schwenkbewegung imstande ist.

5. Kupplung (3) nach Anspruch 4, **dadurch gekennzeichnet, dass** das schwenkbare Teil der Kugeleingriffsmittel (1) um einen im Wesentlichen horizontalen Zapfen (6) schwenkbar ist.

6. Kupplung (3) nach Anspruch 5, **dadurch gekennzeichnet, dass** der horizontale Zapfen (6) mit einem Verschleißnachstell- und Spielreduziermechanismus verbunden ist.

7. Kupplung (3) nach einem der Ansprüche 4 bis 6, **dadurch gekennzeichnet, dass** das schwenkbare Teil (5) der Kugeleingriffsmittel (1) mit einem oder mehr, insbesondere zwei, zueinander schwenkbaren Kugelumklammerungsmitteln (5-1, 5-2) versehen ist.

8. Kupplung (3) nach einem der Ansprüche 1 bis 7, **dadurch gekennzeichnet, dass** das Translationsteil (5) der Kugeleingriffsmittel (1) zur Translationsbewegung in einer Ebene imstande ist, die quer zur Längsrichtung verläuft.

9. Kupplung (3) nach einem der Ansprüche 1 bis 8, **dadurch gekennzeichnet, dass** die Kupplung (3) Kugelsperrmittel (7) umfasst.

10. Kupplung (3) nach Anspruch 9, **dadurch gekennzeichnet, dass** die Kugelsperrmittel (7) und die Kugeleingriffsmittel (1) ineinander eingegliedert sind.

11. Kupplung (3) nach einem der Ansprüche 9 oder 10, **dadurch gekennzeichnet, dass** die Kugelsperrmittel (7) mit einer beweglichen Nase (8) verbunden sind, die in die Fassung (4) vorsteht und die Kugel (2) in der Fassung (4) nach Kontakt damit sperrt.

12. Lastwagen, der mit einer Kupplung (3) nach einem der Ansprüche 1 bis 11 ausgerüstet ist.

13. Anhänger, der mit einer Kupplung (3) nach einem der Ansprüche 1 bis 11 ausgerüstet ist.

## Revendications

1. Accouplement (3) comprenant une boule (2) et des moyens d'engagement de boule (1) pourvu d'une douille (4), lesquels moyens d'engagement de boule (1) sont au moins partiellement mobiles, de manière à ce que lorsque la boule (2) et la douille (4) se déplacent l'une vers l'autre dans une direction substantiellement horizontale, la partie mobile (5) des moyens d'engagement de boule (1) est déplacée dans une direction à distance de la direction d'approche, **caractérisé en ce que** la boule (2) est reliée à un camion, et les moyens d'engagement de boule (1) sont reliés à une remorque, **en ce que** la partie mobile (5) des moyens d'engagement de boule (1) est capable d'effectuer un mouvement de translation, et **en ce que** la partie mobile translative (5) des moyens d'engagement de boule (1) est capable d'effectuer un mouvement de translation dans une direction substantiellement verticale.

2. Accouplement (3) selon la revendication 1, **caractérisé en ce que** la partie mobile (5) des moyens d'engagement de boule (1) est formée par des éléments d'engagement (5 ; 5-1, 5-2), qui, dans la position couplée, encerclent au moins partiellement la boule (2).

3. Accouplement (3) selon la revendication 2, **caractérisé en ce que** lesdits éléments d'engagement (5 ; 5-1, 5-2) sont configurés comme des becs (5), des crochets (5) ou des cuillères (5-1, 5-2).

4. Accouplement (3) selon l'une quelconque des revendications 1-3, **caractérisé en ce que** la partie mobile (5) des moyens d'engagement de boule (1) est capable d'effectuer un mouvement pivotant.

5. Accouplement (3) selon la revendication 4, **caractérisé en ce que** la partie mobile pivotante des moyens d'engagement de boule (1) peut pivoter autour d'un axe (6) substantiellement horizontal.

6. Accouplement (3) selon la revendication 5, **caractérisé en ce que** ledit axe horizontal (6) est relié à un mécanisme d'ajustement et de réduction du jeu.

7. Accouplement (3) selon l'une quelconque des revendications 4-6, **caractérisé en ce que** la partie mobile pivotante (5) des moyens d'engagement de boule (1) est pourvue d'un ou de plusieurs, en particulier de deux moyens d'encerclement de boule (5-1, 5-2) capables de pivoter l'un par rapport à l'autre.

8. Accouplement (3) selon l'une quelconque des revendications 1-7, **caractérisé en ce que** la partie translative (5) des moyens d'engagement de boule (1) est capable d'effectuer un mouvement de translation dans un plan transversal à la direction longitudinale.

9. Accouplement (3) selon l'une quelconque des revendications 1 à 8, **caractérisé en ce que** l'accouplement (3) comprend des moyens de verrouillage de boule (7).

10. Accouplement (3) selon la revendication 9, **caractérisé en ce que** lesdits moyens de verrouillage de boule (7) et lesdits moyens d'engagement de boule (1) sont intégrés les uns aux autres.

11. Accouplement (3) selon la revendication 9 ou 10, **caractérisé en ce que** lesdits moyens de verrouillage de boule (7) sont reliés à une lèvre mobile (8) faisant saillie dans la douille (4) et bloquant la boule (2) dans la douille (4) lors de la mise en contact avec celle-ci.

12. Camion équipé d'un accouplement (3) selon l'une quelconque des revendications 1-11.

13. Remorque équipée d'un accouplement (3) selon l'une quelconque des revendications 1-11.
